# EUROPÄISCHE PATENTSCHRIFT

(11) **EP 3 812 095 B1**
(45) Veröffentlichungstag und Bekanntmachung des Hinweises auf die Patenterteilung: **01.05.2024**
(21) Anmeldenummer: 20203589.5
(22) Anmeldetag: 23.10.2020
(51) Int. Cl.: B24C 5/02, B24C 9/00, B24C 7/00, F21V 33/00, B23Q 17/24, B25H 1/00

(54) **STRAHLMITTELDÜSENVORRICHTUNG MIT BELEUCHTUNGSEINHEIT**
ABRASIVE NOZZLE ASSEMBLY WITH LIGHTING UNIT
DISPOSITIF DE BUSE POUR AGENT À PROJETER POURVU D'UNITÉ D'ÉCLAIRAGE

(30) Priorität: 24.10.2019 DE 202019105904 U; 06.11.2019 DE 102019129881; 06.10.2020 DE 102020126137
(43) Veröffentlichungstag der Anmeldung: 28.04.2021
(73) Patentinhaber: Taraschewski, René, 01825 Liebstadt (DE)
(72) Erfinder: Taraschewski, René, 01825 Liebstadt (DE)
(74) Vertreter: Werner, André

(56) Entgegenhaltungen:
- DE-A1- 19 738 572
- FR-A1- 3 071 175
- KR-B1- 101 378 978
- US-A- 5 024 029
- US-A- 5 801 454
- US-A- 5 873 647
- US-A1- 2018 264 625

## Beschreibung

Die Erfindung betrifft eine Strahlmitteldüsenvorrichtung mit einer Beleuchtungseinheit zur gezielten Beleuchtung eines Werkstücks während der Oberflächenbearbeitung mittels eines abrasiven Strahlmittels. Sie eignet sich zum Abrasivstrahlen von schlecht sichtbaren, insbesondere abgeschatteten Werkstückbereichen.

Bekannt ist das Abrasivstrahlen mit beleuchteten Strahlmitteldüsen u. a. aus US 4 901 928 A und US 5 024 029 A. Die gezielte Beleuchtung des zu strahlenden Werkstücks erfolgt demgemäß mittels einer Hochenergielichtquelle, die seitlich am Griff der Strahlmitteldüse montiert ist. US 5 024 029 A offenbart eine Strahlmitteldüsenvorrichtung gemäß dem Oberbegriff des Anspruchs 1. Ähnliche einseitig an der Strahlmitteldüse angebrachte Beleuchtungseinheiten sind in DE 203 14 305 U1 und in DE 20 2010 007 491 U1 offenbart.

Diese bekannten Beleuchtungseinheiten gewährleisten zwar eine weitestgehend direkte Beleuchtung des zu strahlenden Bereichs. Jedoch kommt es während des Abrasivstrahlens zu Abschattungseffekten durch die Anordnung der Strahlmitteldüse relativ zur Beleuchtungseinheit. Die bei der Handhabung der Strahlmittedüse infolgedessen auftretenden Licht- und Schattenwechsel sind für das Bedienpersonal vielfach hinderlich, da die Strahlmitteldüse zusammen mit der Beleuchtungseinheit für ein zielgenaues Arbeiten immer wieder beleuchtungsgerecht ausgerichtet werden muss. Die damit verbundenen kurzen Prozessunterbrechungen verringern die Effizienz beim Abrasivstrahlen.

US 5 801 454 A offenbart ein druckluftbetriebenes Werkzeug mit einer Beleuchtungseinheit, deren Leuchtmittel konzentrisch um die rotierende Welle angeordnet sind. Eine konzentrische Anordnung der Leuchtmittel um die Strahlmitteldüse von Strahlmitteldüsenvorrichtungen ist in KR 101 378 978 B1 beschrieben.

US 5 873 647 A offenbart eine Lampe für eine Düse mit einem ringförmigen Gehäuse, in dem sich eine Beleuchtungseinheit befindet. Abstrahlseitig sind zwei Ringlinsen vor der Beleuchtungseinheit positioniert, die mittels eines als Überwurfmutter ausgebildeten Halteelements befestigt sind, um die Beleuchtungseinheit innerhalb des Gehäuses hermetisch abzudichten.

Aus dem Stand der Technik sind wenige Systeme bekannt, welche der Person des Sandstrahlers erlauben, das Strahlmittel fern vom Strahlmittelbehälter (genannt Druckstrahlkessel) zu dosieren. Nachteilig dabei ist insbesondere, dass eine unnötig große Menge Strahlmittel verbraucht wird und die Strahlergebnisse in der Qualität unterschiedlich ausfallen. Zudem geht wertvolle Arbeitszeit verloren, wenn der Sandstrahler aufgrund Verstopfungen oder vorweg falsch eingestelltem Dosierventil zu viel oder zu wenig Strahlmittel am Düsenausgang zum Sandstrahlen zur Verfügung hat und andernorts per Hand aufwendig und frustbeladen nachregeln muss. Fernsteuerungen sowie Steuerungen mit regelbaren Dosierventilen sind u. a. in US 5 024 029 A, US 2018/264625 A1, DE 197 38 572 A1 und FR 3 071 175 A1 offenbart.

Aufgabe der Erfindung ist es daher, eine Strahlmitteldüsenvorrichtung bereitzustellen, die es erlaubt, den Strahlmittelfluss unabhängig vom Luftfluss zu steuern und/oder den Luftfluss unabhängig vom Strahlmittelfluss an- und abzuschalten, wobei die zu strahlenden Bereiche des Werkstücks abschattungsfrei beleuchtbar sein sollen.

Diese Aufgabe wird mit einer Strahlmitteldüsenvorrichtung zur Oberflächenbearbeitung eines Werkstücks mittels eines abrasiven Strahlmittels mit den kennzeichnenden Merkmalen nach dem Anspruch 1 gelöst; zweckmäßige Weiterbildungen der Erfindung sind in den Ansprüchen 2 bis 12 aufgeführt.

Nach Maßgabe der Erfindung umfasst die Strahlmitteldüsenvorrichtung eine Strahlmitteldüse sowie eine Beleuchtungseinheit zur gezielten Beleuchtung des Werkstücks, wobei die Beleuchtungseinheit auf einer zur Strahlmitteldüse konzentrischen Umfangslinie mehrere, gleichmäßig verteilt angeordnete Leuchtmittel aufweist, d. h., die Leuchtmittel befinden sich an Positionen auf einer radial zur Düsenachse der Strahlmitteldüse ausgebildeten Ebene, besitzen alle den gleichen Abstand zur Düsenachse und sind jeweils zueinander gleich beabstandet.

Weiterhin weist die Strahlmitteldüsenvorrichtung ein Strahlmittelferndosiersystem auf, das ein Strahlmitteldosierventil mit elektrischem und/oder mechanischem Antrieb und eine mit demselben verbundene Auswerte- und Steuerelektronik umfasst.

Insbesondere ist das Strahlmitteldosierventil jederzeit auch per Hand regel- und schließbar. Dies ist wichtig beim Ausfall einer elektrischen Komponente.

In vorteilhafter Weise ist das Strahlmittelferndosiersystem direkt an der Strahlmitteldüsenvorrichtung jederzeit an- und abschaltbar. Nach dem Abschalten kann die letzte Dosiermenge gespeichert werden, um nach erneutem Anschalten wieder zur Verfügung zu stehen. Die Bedienung erfolgt komplett an der Strahlmitteldüsenvorrichtung, d. h., es ist dem Sandstrahler erlaubt, das Strahlmittel fern vom Strahlmittelbehälter, dem sog. Druckstrahlkessel, zu kontrollieren bzw. zu dosieren.

Als Leuchtmittel dienen gerichtete Lichtquellen, deren Licht jeweils kegelförmig abstrahlt, d. h. sich im Strahlengang aufweitet. Die Abstrahlrichtung stellt nach bekannter Definition die Strahlrichtung der höchsten Lichtintensität des Lichtkegels dar. Der Abstrahlwinkel der Leuchtmittel liegt vorzugsweise im Bereich von 5° bis 55°. Als Leuchtmittel eignen sich insbesondere Leuchtdioden (LEDs).

Erfindungsgemäß ist die Abstrahlrichtung jedes der Leuchtmittel parallel zur Strahlmitteldüse, d. h. zu ihrer Düsenachse, ausgerichtet.

Die Beleuchtungseinheit der Strahlmitteldüsenvorrichtung ist abstrahlseitig mittels einer gummielastischen (d. h. aus einem Gummiwerkstoff bestehenden) Schutzkappe, abgedeckt, in die ein oder mehrere Lichtdurchtrittsaussparungen, durch die das von den Leuchtmitteln ausgehende Licht passieren kann, eingebracht sind.

Die Strahlmitteldüsenvorrichtung weist ferner eine transparente, austauschbare Wechselschutzscheibe auf, die die Leuchtmittel in ihrem Strahlengang gegen den Zutritt des Strahlmittels abdeckt. Die Wechselschutzscheibe ist eine ringscheibenförmige Kunststofffolie. Sie ist mittels der Schutzkappe abstrahlseitig vor den Leuchtmitteln bzw. vor dem Gehäusefenster installiert.

Die vorgeschlagene Strahlmitteldüsenvorrichtung zeichnet sich dadurch aus, dass von der Beleuchtungseinheit ein Bündel aus gerichteten Lichtkegeln ausgesandt wird, welches koaxial zur Strahlmitteldüse angeordnet ist. Durch die ringförmige Überlappung der sich aufweitenden, einzelnen Leuchtmittel-Lichtkegel wird der abrasiv zu strahlende Bereich auf der Werkstückoberfläche abschattungsfrei ausgeleuchtet. Dies gewährleistet die gute Erkennbarkeit der abrasiv zu strahlenden Werkstückbereiche durch das Bedienpersonal - kontinuierlich während der gesamten Dauer der Bearbeitung.

Durch die Wechselschutzscheibe wird verhindert, dass die Leuchtmittel bzw. das Gehäusefenster durch auftreffende abrasive Strahlmittelkörner verschleißen. Erreicht der (unvermeidliche) Verschleiß der Wechselschutzscheibe nach einer gewissen Nutzungsdauer ein störendes Ausmaß, kann die Wechselschutzscheibe zum Beispiel um wenige Grad weitergedreht werden, um nicht verschlissene Bereiche der Wechselschutzscheibe im Strahlgang der Leuchtmittel zu positionieren. Alternativ besteht die Möglichkeit, die als Verschleißteil konzipierte Wechselschutzscheibe komplett zu tauschen.

Vorzugsweise werden vier bis zwölf Leuchtmittel gleichmäßig verteilt am Umfang der Strahlmitteldüse angeordnet.

Die Leuchtmittel können zum Beispiel auf einem ringförmigen Leuchtmittelträger fixiert sein.

Die Strahlmitteldüsenvorrichtung ist bevorzugt ergonomisch geformt und kompakt ausgeführt; somit ist sie komfortabel bedienbar und ohne großen technischen Aufwand zu warten bzw. zu reparieren.

Die Strahlmitteldüsenvorrichtung ist zudem so gestaltet, dass jene und die Bedienelemente, Anbauteile etc. gegen Strahlmittelrückprall gut mechanisch geschützt sind.

Zusatzmodule, wie Unterdruckstufen und eine Feuchtstrahlaußenstufe, sind ohne großen technischen Aufwand montierbar, zusätzliche Düsenkombinationen sind vorsetzbar. Die Strahlmitteldüsenvorrichtung kann im Inneren außerdem über eine Wasserzumischeinheit zur Zumischung von Wasser zum Strahlmittel verfügen. Es kann vorgesehen sein, dass die Leuchtmittel in ein ringförmiges Leuchtmittelgehäuse eingesetzt sind, das in Abstrahlrichtung der Leuchtmittel mit einem ringscheibenförmigen, transparenten Gehäusefenster verschlossen ist. Das Gehäusefenster gewährleistet die Transmission des von den Leuchtmitteln ausgehenden Lichts, verhindert jedoch den Zutritt des Strahlmittels zu den Leuchtmitteln.

Die Leuchtmittel ebenso wie das Leuchtmittelgehäuse können zudem mittels einer Gehäusekappe gegen den Zutritt von Strahlmittel verkleidet sein. Diese Gehäusekappe ist vorzugsweise als Überwurfmutter ausgeführt, die auf ein am Leuchtmittelgehäuse angebrachtes Außengewinde aufschraubbar ist.

Alternativ können die Leuchtmittel und das Leuchtmittelgehäuse in einem Düsenhalter integriert sein.

Eine Ausgestaltung sieht vor, dass das Strahlmitteldosierventil ein Anzeigeelement aufweist, das die am Strahlmitteldosierventil eingestellte Strahlmitteldosiermenge anzeigt. Somit kann der Bediener von außen erkennen, wo die Ventilöffnung steht bzw. welche Dosiermenge eingestellt ist. Das Anzeigeelement kann elektrisch, z. B. als Leuchtdiodenreihe oder Zeigerinstrument, oder mechanisch, z. B. als sich mit dem Öffnungsgrad des Strahlmitteldosierventils über eine Skala mitbewegende Markierung, ausgestaltet sein.

Zusätzlich kann das Strahlmitteldosierventil mit einem Nullpositionsgeber ausgerüstet sein. Außerdem ist das Strahlmitteldosierventil vorzugsweise in kleinen Stufen oder Schritten verstellbar, um den optimalen Arbeitspunkt einzustellen.

Es kann vorgesehen sein, dass das Strahlmitteldosierventil ein Gummidosierventil ist. Allerdings ermöglicht ein Gummidosierventil, da sich der Gummi verformt, nur eine "ungefähr" punktgenaue Dosierung.

Alternativ kann als Strahlmitteldosierventil ein Metalldosierventil eingesetzt sein. Metalldosierventile ermöglichen eine schrittweise oder stufenweise Dosierung infolge Endpunktlagenauswertung.

Als besonders geeignet hat sich ein Kükendosierhahn erwiesen, da er folgende Bedingungen erfüllt:
- leicht zu reinigen und zu warten;
- jederzeit auch per Hand regelbar und schließbar (wichtig beim Ausfall einer elektrischen Komponente);
- der Bediener kann von außen erkennen, wo die Ventilöffnung steht;
- das Ventil weist einen Nullpositionsgeber auf; zudem ist es in kleinen Stufen oder Schritten verstellbar, um den optimalen Arbeitspunkt einzustellen.

Gemäß einer Ausführungsform umfasst die Auswerte- und Steuerelektronik einen Datenspeicher, in welchem die am Strahlmitteldosierventil eingestellte Strahlmitteldosiermenge stromlos speicherbar ist.

Für die Verstellung des Strahlmitteldosierventils kann ein Schrittmotor, untersetzt z. B. mit einem Schneckengetriebe, der in frei definierbaren Stufen oder Schritten das Strahlmitteldosierventil antreibt, vorgesehen sein. Es ist möglich, die gefahrenen Schritte in einem Speicher zu dokumentieren, um eine Position zu behalten und/oder zu wiederholen.

Vorteilhaft ist, dass beim Notabschalten der Schrittmotor durch sehr schnelles Drehen das Dosierventil schließt, den Strahlmittelfluss unmittelbar stoppt und so Gefahren vermindert.

Die Strahlmitteldüsenvorrichtung kann zudem eine automatische Strahlmitteldosierung, realisiert durch das Messen der Partikelmenge, eine umfassende Auswerteeinheit sowie Kühltechnik, besonders im Hinblick auf ein besseres Abstrahlen von Elastomeren, enthalten.

Die Erfindung ist nachfolgend anhand von Ausführungsbeispielen und mit Bezug auf die schematischen Zeichnungen näher erläutert, wobei gleiche oder ähnliche Merkmale mit gleichen Bezugszeichen versehen sind. Dazu zeigen:
- Fig. 1:: eine erste Ausführung der Strahlmitteldüsenvorrichtung mit Beleuchtungseinheit in perspektivischer Ansicht,
- Fig. 2:: die erste Ausführung der Strahlmitteldüsenvorrichtung mit Beleuchtungseinheit in perspektivischer Explosionsdarstellung.
- Fig. 3:: eine zweite Ausführung der Strahlmitteldüsenvorrichtung in perspektivischer Ansicht, und
- Fig. 4:: ein Strahlmitteldosierventil mit Auswerte- und Steuerelektronik in perspektivischer Ansicht.

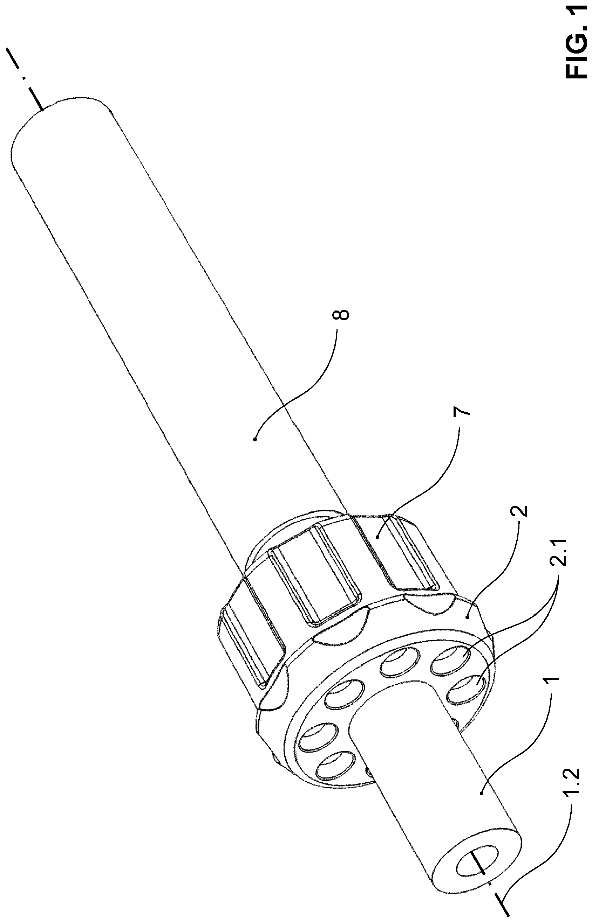

Die Beleuchtungseinheit ist gemäß Fig. 1 konzentrisch zur Düsenachse 1.2 auf der an den Strahlmittelschlauch 8 angeschlossenen Strahlmitteldüse 1 montiert. Durch ihre Schutzkappe 2 und ihre Gehäusekappe 7 ist die Beleuchtungseinheit gegenüber der Umgebung - und damit gegenüber dem Zutritt von Strahlmittel - abgeschirmt. Die Schutzkappe 2 besitzt acht Lichtdurchtrittsaussparungen 2.1, durch die das Licht der (nicht in der Fig. 1 sichtbaren) Leuchtmittel 6.1 als ein koaxial zur Düsenachse 1.2 ausgebildetes Bündel von spitzwinkligen Lichtkegeln austritt.

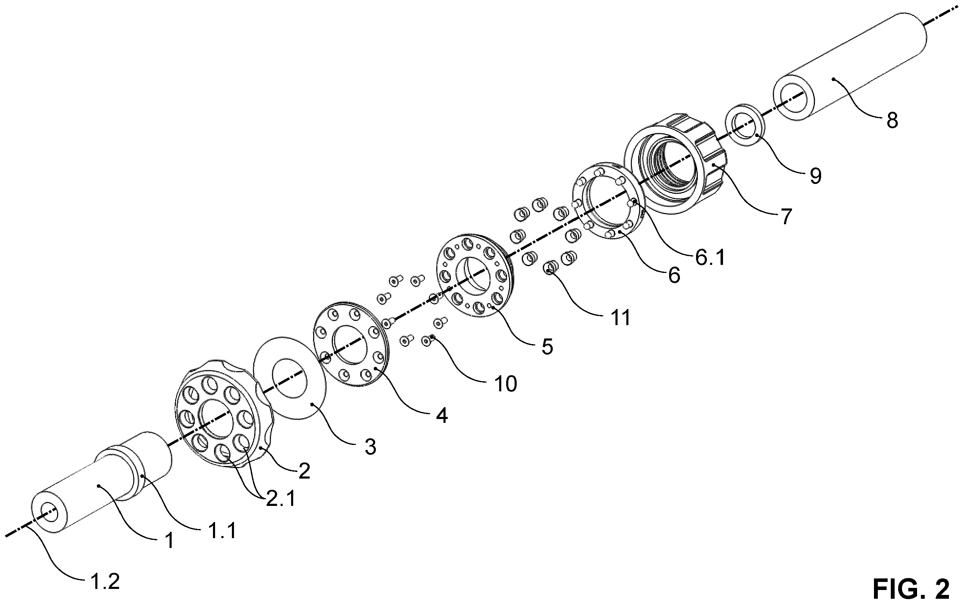

Die entsprechende Explosionsdarstellung gemäß der Fig. 2 verdeutlicht die konzentrische Anordnung der Bauteile um die Düsenachse 1.2 der Strahlmitteldüse 1.

Als Leuchtmittel 6.1 sind acht Leuchtdioden mit einem jeweiligen Abstrahlwinkel von ca. 30° auf dem Leuchtmittelträger 6 installiert. Der Leuchtmittelträger 6 wird an das Leuchtmittelgehäuse 5 montiert, wobei die Leuchtmittel 6.1 in korrespondierende Bohrungen im Leuchtmittelgehäuse 5 eingesetzt sind. Als abstrahlseitiger Verschluss dient das transparente, mittels der Schrauben 10 und der Einsatzmuttern 11 befestigte Gehäusefenster 4.

Das Leuchtmittelgehäuse 5 ist am Anschlagbund 1.1 der Strahlmitteldüse 1 gegen axiale Verschiebung fixiert. Die als Überwurfmutter ausgebildete Gehäusekappe 7 ist mit dem am Leuchtmittelgehäuse 5 befindlichen Außengewinde verschraubt.

Die gummielastische Schutzkappe 2 wird über das austrittsseitige Ende der Strahlmitteldüse 1 gegen das vorinstallierte Leuchtmittelgehäuse 5 auf die Strahlmitteldüse 1 aufgeschoben. Um das Gehäusefenster 4 vor Verschleiß durch Strahlmittel, welches über Lichtdurchtrittsaussparungen 2.1 der Schutzkappe 2 eingetragen werden kann, zu schützen, ist zwischen der Schutzkappe 2 und dem Gehäusefenster 4 die Wechselschutzscheibe 3 eingefügt. Die Wechselschutzscheibe 3 ist eine transparente Kunststofffolie, die nach dem Lösen bzw. Abziehen der Schutzkappe 2 ggf. etwas verdreht oder komplett ausgetauscht werden kann.

Die Dichtung 9 dient als Abdichtung der Strahlmitteldüse 1 zum Strahlmittelschlauch 8.

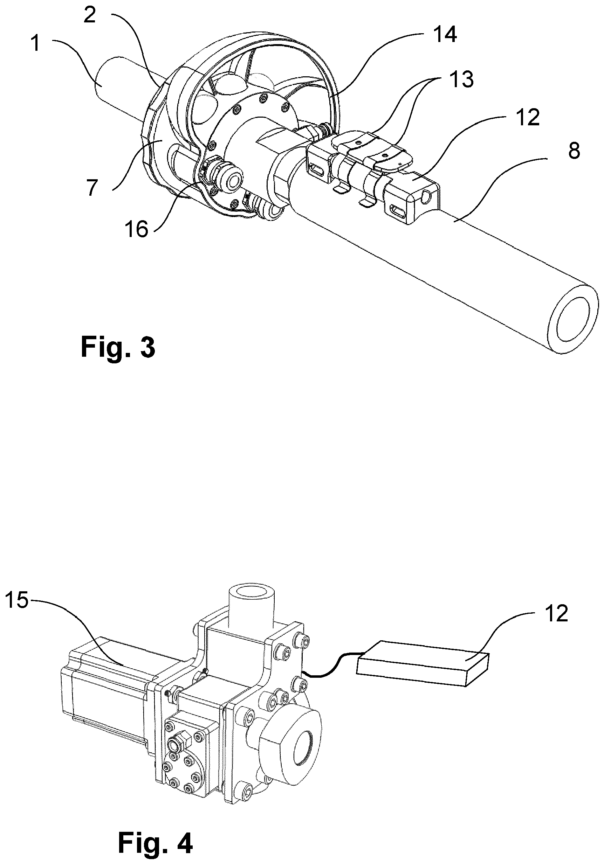

Figur 3 zeigt eine Strahlmitteldüsenvorrichtung zum Trockenstrahlen bzw. Feuchtinnenstrahlen, die als Zusatzmodule den Strahlmittelrückprallschutz 14 und die Feuchtaußenstrahlstufe aufweist. Die Auswerte- und Steuerelektronik 12 mit den Bedienelementen 13 ermöglicht die Steuerung des (nicht in der Fig. 3 sichtbaren) Strahlmitteldosierventils 15.

Ein Strahlmitteldosierventil mit einem Kükenhahn ist in Fig. 4 dargestellt. Der elektrisch geregelte Kükenhahn besitzt einen Positionsanzeiger und eine Not- bzw. Handbetätigung. Angetrieben wird der Kükenhahn über ein Schneckengetriebe von einem Schrittmotor, der von der Auswerte- und Steuerelektronik 12 angesteuert wird.

### Liste der verwendeten Bezugszeichen

- 1: Strahlmitteldüse
- 1.1: Anschlagbund
- 1.2: Düsenachse
- 2: Schutzkappe
- 2.1: Lichtdurchtrittsaussparung
- 3: Wechselschutzscheibe
- 4: Gehäusefenster
- 5: Leuchtmittelgehäuse
- 6: Leuchtmittelträger
- 6.1: Leuchtmittel
- 7: Gehäusekappe
- 8: Strahlmittelschlauch
- 9: Dichtung
- 10: Schraube
- 11: Einsatzmutter
- 12: Auswerte- und Steuerelektronik
- 13: Bedienelement
- 14: Strahlmittelrückprallschutz
- 15: Strahlmitteldosierventil
- 16: Feuchtaußenstrahlstufe

## Patentansprüche

1. Strahlmitteldüsenvorrichtung zur Oberflächenbearbeitung eines Werkstücks mittels eines abrasiven Strahlmittels, umfassend eine Strahlmitteldüse (1) sowie eine Beleuchtungseinheit zur gezielten Beleuchtung des Werkstücks, wobei sie ein Strahlmittelferndosiersystem aufweist, das ein Strahlmitteldosierventil mit elektrischem und/oder mechanischem Antrieb und eine mit demselben verbundene Auswerte- und Steuerelektronik umfasst, **dadurch gekennzeichnet, dass** die Beleuchtungseinheit auf einer zur Strahlmitteldüse (1) konzentrischen Umfangslinie mehrere, gleichmäßig verteilt angeordnete Leuchtmittel (6.1) aufweist, die als gerichtete, kegelförmig abstrahlende Lichtquellen ausgebildet sind, deren jeweilige Abstrahlrichtung parallel zur Strahlmitteldüse (1) ausgerichtet ist, wobei die Beleuchtungseinheit abstrahlseitig mittels einer gummielastischen Schutzkappe (2) abgedeckt ist, die mehrere Lichtdurchtrittsaussparungen (2.1) besitzt, wobei die Leuchtmittel (6.1) im Strahlengang mittels einer transparenten, austauschbaren, verdrehbaren Wechselschutzscheibe (3) in Form einer ringscheibenförmigen Kunststofffolie gegen den Zutritt des Strahlmittels abgedeckt sind, und wobei die Wechselschutzscheibe (3) mittels der Schutzkappe (2) abstrahlseitig vor den Leuchtmitteln (6.1) installiert ist.

2. Strahlmitteldüsenvorrichtung nach Anspruch 1, **dadurch gekennzeichnet, dass** die Leuchtmittel (6.1) in ein ringförmiges Leuchtmittelgehäuse (5) eingesetzt sind, das in Abstrahlrichtung der Leuchtmittel (6.1) mit einem ringscheibenförmigen, transparenten Gehäusefenster (4) verschlossen ist.

3. Strahlmitteldüsenvorrichtung nach Anspruch 2, **dadurch gekennzeichnet, dass** die Leuchtmittel (6.1) und das Leuchtmittelgehäuse (5) mittels einer Gehäusekappe (7) gegen den Zutritt von Strahlmittel verkleidet sind.

4. Strahlmitteldüsenvorrichtung nach Anspruch 3, **dadurch gekennzeichnet, dass** die Gehäusekappe (7) als Überwurfmutter ausgeführt ist, die auf ein am Leuchtmittelgehäuse (5) angebrachtes Außengewinde aufschraubbar ist.

5. Strahlmitteldüsenvorrichtung nach einem der vorstehenden Ansprüche, **dadurch gekennzeichnet, dass** die Leuchtmittel (6.1) auf einem ringförmigen Leuchtmittelträger (6) fixiert sind.

6. Strahlmitteldüsenvorrichtung nach einem der vorstehenden Ansprüche, **dadurch gekennzeichnet, dass** die Leuchtmittel (6.1) einen Abstrahlwinkel im Bereich von 5° bis 55° besitzen.

7. Strahlmitteldüsenvorrichtung nach einem der vorstehenden Ansprüche, **dadurch gekennzeichnet, dass** die Anzahl der gleichmäßig am Umfang der Strahlmitteldüse (1) verteilt angeordneten Leuchtmittel (6.1) im Bereich von 4 bis 12 liegt.

8. Strahlmitteldüsenvorrichtung nach einem der vorstehenden Ansprüche, **dadurch gekennzeichnet, dass** die Auswerte- und Steuerelektronik einen Datenspeicher umfasst, in welchem die eingestellte Strahlmitteldosiermenge stromlos speicherbar ist.

9. Strahlmitteldüsenvorrichtung nach einem der vorstehenden Ansprüche, **dadurch gekennzeichnet, dass** sie eine Wasserzumischeinheit umfasst.

10. Strahlmitteldüsenvorrichtung nach einem der vorstehenden Ansprüche, **dadurch gekennzeichnet, dass** das Strahlmitteldosierventil ein Gummidosierventil oder ein Metalldosierventil ist.

11. Strahlmitteldüsenvorrichtung nach einem der vorstehenden Ansprüche, **dadurch gekennzeichnet, dass** das Strahlmitteldosierventil ein Anzeigeelement aufweist, das die am Strahlmitteldosierventil eingestellte Strahlmitteldosiermenge anzeigt.

12. Strahlmitteldüsenvorrichtung nach einem der vorstehenden Ansprüche, **dadurch gekennzeichnet, dass** sie einen Schrittmotor umfasst, der über ein Untersetzungsgetriebe mit dem Strahlmitteldosierventil verbunden ist.

## Claims

1. Abrasive nozzle assembly for surface processing of a workpiece using an abrasive, comprising a blasting nozzle (1) and an lighting unit for targeted illumination of the workpiece, wherein it comprises a remote abrasive dosing system which has an abrasive dosing valve with an electrical and/or mechanical drive and evaluation and control electronics connected to it, **characterized in that** the lighting unit has several, evenly distributed illuminants (6.1) on a circumferential line concentric to the blasting nozzle (1), which are designed as directed, cone-shaped light sources, their respective radiation direction is aligned parallel to the blasting nozzle (1), wherein the lighting unit being covered on the blasting side by means of a rubber-elastic protective cap (2) which has several light passage recesses (2.1), wherein the illuminants (6.1) are covered in radiation path by means of a transparent, replaceable, rotatable removable protective disk (3) in the form of an annular disk-shaped plastic film to prevent the access of the abrasive, and wherein the removable protective disk (3) is installed on the blasting side in front of the illuminants (6.1) by means of the protective cap (2).

2. Abrasive nozzle assembly according to claim 1, **characterized in that** the illuminants (6.1) are inserted into an annular illuminant housing (5) which is closed in the radiation direction of the illuminants (6.1) with an annular disk-shaped, transparent housing window (4).

3. Abrasive nozzle assembly according to claim 2, **characterized in that** the illuminants (6.1) and the illuminant housing (5) are covered against the access of abrasive by means of a housing cap (7).

4. Abrasive nozzle assembly according to claim 3, **characterized in that** the housing cap (7) is designed as a union nut which can be screwed onto an external thread attached to the illuminant housing (5).

5. Abrasive nozzle assembly according to one of the preceding claims, **characterized in that** the illuminants (6.1) are fixed on an annular illuminant carrier (6).

6. Abrasive nozzle assembly according to one of the preceding claims, **characterized in that** the illuminants (6.1) have a radiation angle in the range of 5° to 55°.

7. Abrasive nozzle assembly according to one of the preceding claims, **characterized in that** the number of the illuminants (6.1) evenly distributed around the circumference of the blasting nozzle (1) is in the range from 4 to 12.

8. Abrasive nozzle assembly according to one of the preceding claims, **characterized in that** the evaluation and control electronics include a data memory in which the set abrasive dosing quantity can be stored without electricity.

9. Abrasive nozzle assembly according to one of the preceding claims, **characterized in that** it comprises a water admixing unit.

10. Abrasive nozzle assembly according to one of the preceding claims, **characterized in that** the abrasive dosing valve is a rubber dosing valve or a metal dosing valve.

11. Abrasive nozzle assembly according to one of the preceding claims, **characterized in that** the abrasive dosing valve has a display element which displays the abrasive dosing quantity set on the abrasive dosing valve.

12. Abrasive nozzle assembly according to one of the preceding claims, **characterized in that** it comprises a stepper motor which is connected to the abrasive dosing valve via a reduction gear.

## Revendications

1. Dispositif de buse pour agent à projeter pour le traitement de surface d'une pièce au moyen d'un agent à projeter abrasif, comprenant une buse pour agent à projeter (1) ainsi qu'une unité d'éclairage pour l'éclairage ciblé de la pièce, dans lequel il présente un système de dosage à distance d'agent à projeter qui comprend une soupape de dosage d'agent à projeter avec un entraînement électrique et/ou mécanique et une électronique d'évaluation et de commande reliée à celle-ci, **caractérisé en ce que** l'unité d'éclairage présente sur une ligne périphérique concentrique à la buse pour agent à projeter (1) plusieurs moyens d'éclairage (6.1), qui sont conçus comme des sources lumineuses dirigées, émettant en forme de cône, dont la direction de projection respective est orientée parallèlement à la buse pour agent à projeter (1), l'unité d'éclairage étant recouverte côté projection au moyen d'un capuchon de protection (2) élastique comme du caoutchouc, qui possède plusieurs évidements de passage de lumière (2.1), les moyens d'éclairage (6.1) étant recouverts dans le trajet du faisceau au moyen d'une vitre de protection interchangeable (3) transparente, remplaçable et rotative, sous la forme d'une feuille de matière plastique en forme de disque annulaire, pour empêcher l'accès de l'agent à projeter, et la vitre de protection interchangeable (3) étant installée devant les moyens d'éclairage (6.1), côté projection, au moyen du capuchon de protection (2).

2. Dispositif de buse pour agent à projeter selon la revendication 1, **caractérisé en ce que** les moyens d'éclairage (6.1) sont insérés dans un boîtier de moyens d'éclairage (5) de forme annulaire, qui est fermé dans la direction de projection des moyens d'éclairage (6.1) par une fenêtre de boîtier (4) transparente en forme de disque annulaire.

3. Dispositif de buse pour agent à projeter selon la revendication 2, **caractérisé en ce que** les moyens d'éclairage (6.1) et le boîtier des moyens d'éclairage (5) sont recouverts au moyen d'un capuchon de boîtier (7) pour empêcher l'entrée de l'agent à projeter.

4. Dispositif de buse pour agent à projeter selon la revendication 3, **caractérisé en ce que**
le capuchon de boîtier (7) est réalisé sous la forme d'un écrou-raccord qui peut être vissé sur un filetage extérieur monté sur le boîtier de moyens d'éclairage (5).

5. Dispositif de buse pour agent à projeter selon l'une des revendications précédentes, **caractérisé**
**en ce que** les moyens d'éclairage (6.1) sont fixés sur un support de moyens d'éclairage (6) de forme annulaire.

6. Dispositif de buse pour agent à projeter selon l'une des revendications précédentes, **caractérisé en ce que** les moyens d'éclairage (6.1) possèdent un angle de projection dans la plage de 5° à 55°.

7. Dispositif de buse pour agent à projeter selon l'une des revendications précédentes, **caractérisé**
**en ce que** le nombre de moyens d'éclairage (6.1) répartis uniformément sur la périphérie de la buse pour agent à projeter (1) se situe dans la plage de 4 à 12.

8. Dispositif de buse pour agent à projeter selon l'une des revendications précédentes, **caractérisé en ce que** l'électronique d'évaluation et de commande comprend une mémoire de données dans laquelle la quantité de dosage d'agent à projeter réglée peut être mémorisée sans courant.

9. Dispositif de buse pour agent à projeter selon l'une des revendications précédentes, **caractérisé en ce qu'**il comprend une unité de mélange d'eau.

10. Dispositif de buse pour agent à projeter selon l'une des revendications précédentes, **caractérisé en ce que** la soupape de dosage de l'agent à projeter est une soupape de dosage en caoutchouc ou une soupape de dosage en métal.

11. Dispositif de buse pour agent à projeter selon l'une des revendications précédentes, **caractérisé**
**en ce que** la soupape de dosage d'agent à projeter présente un élément d'affichage qui indique la quantité de dosage d'agent à projeter réglée sur la soupape de dosage d'agent à projeter.

12. Dispositif de buse pour agent à projeter selon l'une des revendications précédentes, **caractérisé**
**en ce qu'**il comprend un moteur pas à pas relié à la soupape de dosage d'agent à projeter par un réducteur de vitesse.
